# EUROPEAN PATENT SPECIFICATION

(11) **EP 0 371 048 B1**
(45) Date of publication and mention of the grant of the patent: **16.03.1994**
(21) Application number: 88905964.8
(22) Date of filing: 08.07.1988
(51) Int. Cl.: H01B 7/02, H01B 3/10, H01B 3/42, H01B 3/44

(54) **ELECTRICAL WIRE**
ELEKTRISCHER DRAHT
FIL ELECTRIQUE

(30) Priority: 10.07.1987 GB 8716307
(43) Date of publication of application: 06.06.1990
(73) Proprietor: RAYCHEM LIMITED, London, EC4 1NL (GB)
(72) Inventor: DAY, Stephen, Wiltshire SN6 6PJ (GB); PENNECK, Richard, John, Gloucestershire GL7 3BT (GB)
(74) Representative: Dlugosz, Anthony Charles
(86) International application number: GB8800548
(87) International publication number: WO8900758

(56) References cited:
- EP-A- 0 103 487
- EP-A- 0 132 343
- EP-A- 0 224 281
- FR-A- 2 555 799
- GB-A- 2 144 260

## Description

This invention relates to electrical wires, and especially to wires that employ electrical insulation based on aromatic polymers.

Electrical wires that use aromatic polymer insulation have been used for many years in numerous applications. For example wires that employ polyimide wraps or tapes usually bonded with fluoropolymer adhesive layers have been used extensively as aircraft wire, for both civil and military applications. Other examples of aromatic insulation that have been used for equipment wire or "hook-up" wire, air frame wire and in wire harnesses include aromatic polyether ketones, polyether ether ketones, modified polyphenylene oxide, and polyimide amides. Highly aromatic polymers have been used successfully in many applications because they have a range of desirable properties especially high strength and toughness, abrasion resistance, temperature resistance, dielectric strength and are often inherently highly flame-retarded.

The combination of these properties has enabled wire and cable fabricated from these polymers to be used in small lightweight constructions. Such constructions have been used increasingly in both military and civil applications due to the high density and complexity of modern electrical systems.

However, these highly aromatic polymers suffer from a major problem: they are particularly susceptible to tracking, often referred to as "wet tracking". Tracking is a phenomenon associated with the formation of permanent and progressive conducting paths on the surface of the material by the combined effects of an electrical field and external surface pollution. Once commenced, the carbonaceous conducting deposits often extend quickly in dendritic fashion to give a characteristic "tree" pattern until failure occurs across the surface. Electrical tracking can occur when a damaged energised bundle of wires become wet e.g. from electrolytes or condensation. This tracking may lead to flashover and arcing that causes additional wires in the bundle to become damaged. A catastrophic cascade failure can result from a fault to a single wire if adjacent wires that are at a different electrical potential are also susceptible to tracking or if the bundle is in contact with a grounded structure. Tracking can occur at low voltages e.g. 100V a.c. or less but becomes less likely as the voltage is reduced.

A related phenomenon, to which these polymers are also highly susceptible, is that of breakdown due to arcing, often referred to as "arc tracking". In this case a potential difference between two conductors, or between a conductor in which the insulation has been mechanically damaged, and ground, can result in the formation of an arc between the conductors or between the conductor and ground. The high temperature of the arc causes the polymer to degrade extremely rapidly and form an electrically conductive carbonaceous deposit which can extend rapidly, as with wet tracking, and lead to catastrophic failure in which may or all of the wires in a bundle are destroyed. Arcing can occur at very low voltages, for example 24V d.c. or lower, and since, unlike tracking, no electrolyte or moisture is involved, it is a particularly hazardous phenomenon. Arcs may be struck by drawing apart two conductors between which a current is passing as described for example by J.M. Somerville "The Electric Arc", Methuen 1959.

Another phenomenon that can be associated with tracking and arcing is erosion. In this case insulating material is removed by a vaporization process originated by an electrical discharge without the formation of electrically conductive deposits so that failure of the insulation will not occur until complete puncture of the insulation occurs.

A wire that is designed to have a high resistance to arcing is described in FR-A-2,555,799. This wire may have insulation comprising an inner polyimide layer and an outer thermoplastic layer for example a fluoropolymer layer.

According to the present invention, there is provided an electrical wire which comprises an elongate electrical conductor and electrical insulation comprising:
(a) an aromatic layer; and
(b) a tracking control layer located on top of layer (a)
characterised in that layer (a) comprises a crosslinked blend of an aromatic polymer and a polymer containing aliphatic moities.

One property of the polymer components used in the wire insulation that is important in determining the arcing and tracking properties of the insulation is the carbonaceous char residue of the polymers. The char residue of the polymer components in the electrical wire according to the invention can be measured by the method known as thermogravimetric analysis, or TGA, in which a sample of the polymer is heated in nitrogen or other inert atmosphere at a defined rate to a defined temperature and the residual weight, which is composed of char, is recorded. The char residue is simply the quantity of this residual char expressed as a percentage of the initial polymer after having taken into account any non polymeric volatile or non-volatile components. The char residue values quoted herein are defined as having been measured at 850°C and with a heating rate of 10°C per minute. The aromatic polymer will usually have a char residue of at least 25% by weight, and many aromatic polymers will have a char residue of at least 30%, some polymers having a char residue of at least 40% and even at least 50%. This does not mean to say that a high char value is desired for its own sake, but simply that good mechanical and physical properties of these aromatic polymers including temperature stability and fire retardancy, are usually associated with high char residues.

The preferred aromatic polymers which are used in this invention are well known to those skilled in the art, and reference may be made for example to U.S. Patents Nos. 3,025,605, 3,306,874, 3,257,357, 3,354,129, 3,441,538, 3,442,538, 3,446,654, 3,658,938, 3,677,921, 3,838,097, 3,847,867, 3,953,400, 3,956,240, 4,107,147, 4,108,837, 4,111,908, 4,175,175, 4,293,670, 4,320,224, 4,433,088 and 3,446,654, British Patents Nos. 971,227, 1,369,210, 1,599,106 and 2,163,759A and European Patent Applications Nos. 170,065, 124,276 and 178,185. The disclosures of these specifications are incorporated herein by reference. The most preferred polymers are polyether imides and polyphenylene oxides although polymers such as polyketones, polyether ketones, polyether ether ketones, polyether sulphones and polyether ketone/sulphone copolymers may be used especially if they include one or more aliphatic moieties. Blends of different polymers can be used. As indicated above, it is preferred for the aromatic polymer to contain one or more aliphatic moieties. In such cases the aliphatic moieties may comprise pendant alkyl groups or may comprise alkylene groups in the polymer backbone. Preferably the or each aliphatic moiety has not more than 4, and more preferably not more than 3 carbon atoms. In the case of pendant alkyl groups, each group is most preferably a methyl group, while in the case of alkylene groups each group preferably has not more than 3 carbon atoms, and especially only one carbon atom, in the chain backbone, for example a methylene or isopropylidine group.

Preferred aromatic polymers are polymers with a melting or softening point of at least 250°C, particularly at least 300°C and which may be crystalline or amorphous. Softening points of amorphous polymers may conveniently be measured by thermomechanical analysis (TMA), in which case the softening point refers to the temperature at which the probe has reached 60% penetration. In one class of such polymers the polymer comprises units of the formula

-Ar-Q-

the units being the same or different,
wherein Ar represents an unsubstituted or substituted divalent aromatic radical and Q represents -O-, -S-, -SO₂-, -CO-, -NH-CO- or -COO-, or Ar represents a trivalent radical and Q represents 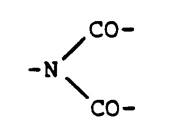
each bond of the Q radical preferably being bonded directly to an aromatic carbon atom.

One preferred class of polymer comprises the polyphenylene oxides of the repeating unit 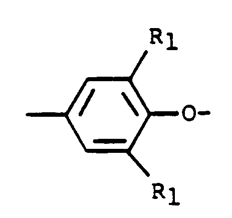
in which the groups R₁, which may be the same or different, each represents a hydrogen or halogen atom or an aliphatic group having no tertiary alpha carbon atom, preferably a methyl group.

In another class of aromatic polymers the aromatic polymer is a crystalline polyarylene ether comprising recurring units of the formula

-O-E-O-E'-

where E is the residue of a dihydric phenol and E' is the residue of an aromatic compound having an electron withdrawing group in at least one of the positions ortho and para to the valence bonds, the E and E' radicals being linked to the -O- radicals through aromatic carbon atoms. In one preferred sub-class, E may be a radical of the formula 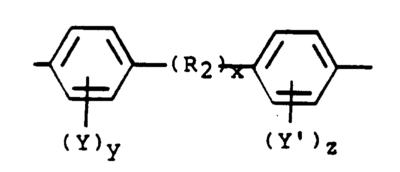
wherein R₂ is a divalent radical; x is 0 or 1; Y and Y' which may be the same or different each represents a halogen atom, alkyl radical containing 1 to 4 carbon atoms or alkoxy radical containing 1 to 4 carbon atoms; y and z independently of one another are 0 or an integer of up to 4 and E' is a radical of the formula 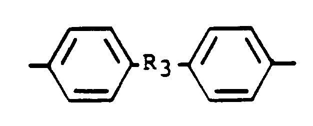
wherein R₃ is a sulphone, carbonyl, vinyl, sulphoxide, azo, saturated fluorocarbon, organic phosphine oxide or ethylidene radical, preferably at least one of the radicals R₂, R₃, Y or Y' being aliphatic. In this class preferred polysulphones are those in which y and z are 0, x is 1, R₃ is a sulphone radical and R₂ is a radical of the formula 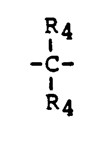
wherein each of R₄ is independently selected from hydrogen atoms; alkyl radicals containing 1 to 4 carbon atoms which may be unsubstituted or substituted by one or more halogen atoms; aryl, alkaryl and aralkyl radicals containing 6 to 10 carbon atoms which may be unsubstituted or substituted by one or more halogen atoms.

In another class of aromatic polymers, the polymer is a polyether imide or polysulphone imide which comprises recurring units of the formula 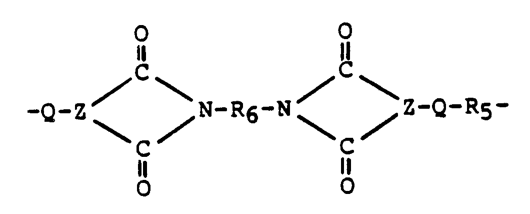
where Q is -O- or -SO₂-, Z is a trivalent aromatic radical, R₅ is a divalent aromatic radical, and preferably one that includes an alkylene moiety and R₆ is a divalent organic radical, preferred polymers having the formula: 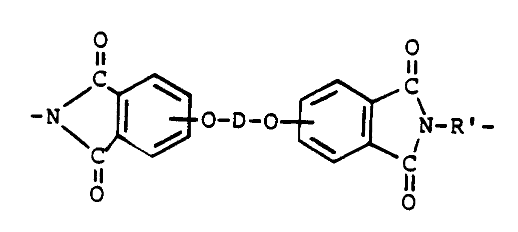
in which D represents a group of the formula: 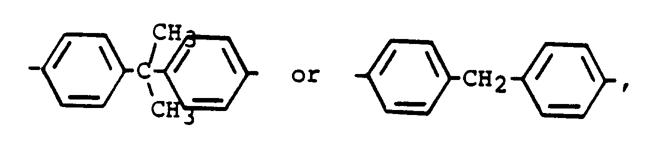
and R' represents an arylene group.

Another class of polymers is the polyetherketones that have repeating groups comprising aromatic ether and aromatic ketone groups together with an imide, amide, ester, benzoxazole or benzothiazole group especially if the polymer contains an aliphatic group.

Yet another class of aromatic polymer is the polyarylates. Polyarylates that may be used include those that are derived from dihydric phenols and at least one aromatic dicarboxylic acid. Examples of such polymers include those derived from a dihydric phenol of the general formula 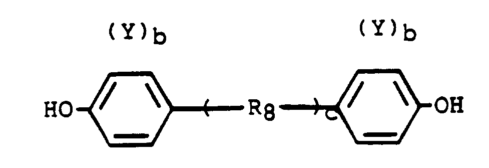
in which the groups Y, which may be the same or different, each represent a hydrogen atom, a C₁ to C₄ alkyl group, or a chlorine or bromine atom; b is 0 or an integer from 1 to 4; R₈ represents a divalent saturated or unsaturated hydrocarbon group, e.g. an alkylene, alkylidine, cycloalkylene or cycloalkylidine group, an oxygen or sulphur atom or a carbonyl or sulphonyl group; and c is 0 or 1.

Preferred aromatic polymers consist essentially of repeating units having one of the following formulae 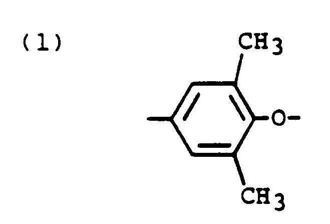 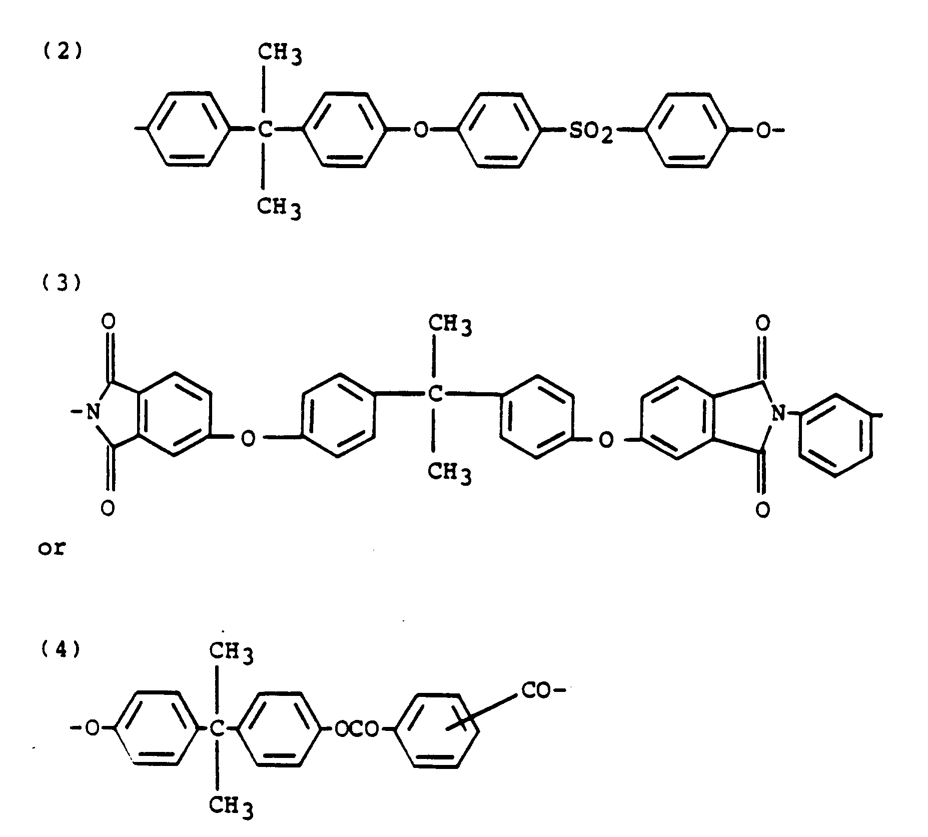
in which units derived wholly from isophthalic acid or terephthalic acid or a mixture of both are present.

Blends of any two or more of the above polymers may be employed as may copolymers based on any two or more of these polymers. In addition, blends of any of the above polymers with other wholly aromatic polymers (i.e. having no aliphatic moieties) may be employed.

The preferred aromatic polymers will usually have a molar C:H ratio of at least 1.0, preferably at least 1.2, more preferably at least 1.3 and especially at least 1.4. The toughest polymers such as the polyetherimides, which are associated with high char residues, will have C:H ratios greater than 1.5.

The polymer blends used to form the insulation usually contain at least 20% by weight aromatic polymer, preferably at least 30%, more preferably at least 50% and especially at least 60% by weight aromatic polymer based on the total polymeric component, the term aromatic polymer as used herein meaning polymers having a sufficiently high proportion of aromatic rings that the polymer has a char residue of at least 25%. More than one such polymer may be used.

The polymer containing aliphatic moieties used in layer (a), will be referred to herein simply as aliphatic polymers for the sake of brevity, although it should be noted that these polymers may, and often will, include aromatic moieties in addition to their aliphatic moieties. The polymer may, at least in the broadest aspect, be any organic polymer, including copolymers and blends of polymers, having a char residue of not more than 15%, preferably not more than 10%, more preferably not more than 5% and most especially not more than 2%, the most preferred polymers often having char residues of 0%. It is possible for the polymer to include one or more aromatic moieties in addition to its aliphatic moieties, and indeed a number of preferred polymers do so. However the polymer should have sufficient aliphatic nature that the C:H ratio is not more than 1. Examples of aliphatic polymers include olefin homopolymers and copolymers of olefins with other olefins and with other monomers e.g. vinyl esters, alkyl acrylates and alkyl alkacrylates, e.g. low, medium and high density polyethylene, linear low density polyethylene and ethylene alpha-olefin copolymers, ethylene/propylene rubber, butyl rubber, ethylene vinyl acetate, ethylene ethyl acrylate and ethylene acrylic acid copolymers, and linear or radial styrene diene di- or tri-block copolymers e.g. styrene/butadiene, styrene/isoprene copolymers, styrene/butadiene/styrene and styrene/isoprene/styrene, and hydrogenated versions of these block copolymers especially styrene ethylene/butylene/styrene block copolymers. A particularly preferred class of low charring polymers is the polyamides. Preferred polyamides include the nylons e.g. nylon 46, nylon 6, nylon 7, nylon 66, nylon 610, nylon 611, nylon 612, nylon 11, nylon 12 and nylon 1212 and aliphatic/aromatic polyamides, polyamides based on the condensation of terephthalic acid with trimethylhexamethylene diamine (preferably containing a mixture of 2,2,4- and 2,4,4-trimethylhexamethylene diamine isomers), polyamides formed from the condensation of one or more bis-aminomethylnorbornane isomers with one or more aliphatic, cycloaliphatic or aromatic dicarboxylic acids e.g. terephthalic acid and optionally including one or more amino acid or lactam e.g. ε-caprolactam comonomers, polyamides based on units derived from laurinlactam, isophthalic acid and bis-(4-amino-3-methylcyclohexyl) methane, polyamides based on the condensation of 2,2-bis-(p-aminocyclohexyl) propane with adipic and azeleic acids, and polyamides based on the condensation of trans cyclohexane-1,4-dicarboxylic acid with the trimethylhexamethylene diamine isomers mentioned above. Other aliphatic polymers that may be used include polyesters e.g. polyalkylene terephthalate and especially polytetramethylene terephthalate, and cycloaliphatic diol/terephthalic acid copolymers e.g. copolymers of terephthalate and isophthalate units with 1,4-cyclohexanedimethyloxy units, polysulphides, polyethers e.g. polybutylene ether copolymers, and especially polyether esters such as those having polytetramethylene ether and polytetramethylene terephthalate blocks; aliphatic ionomers e.g. those based on metal salts of ethylene (meth)acrylic acid copolymers or sulphonated olefins such as sulphonated EPDM, and the like. Preferred aliphatic polymers include polyethylene, polybutylene terephthalate, ionomers based on metal salts of methacrylated polyethylene, acrylic elastomers e.g. those based on methyl, ethyl or n-butyl acrylate or alkoxy-substituted ethyl or n-butyl acrylate polymers containing a cure site monomer and optionally ethylene comonomer, and block copolymers having long chain ester units of the general formula: 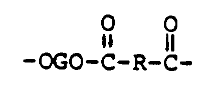
and short-chain ester units of the formula 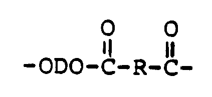
in which G is a divalent radical remaining after the removal of terminal hydroxyl groups from a polyalkylene oxide) glycol, preferably a poly (C₂ to C₄ alkylene oxide) having a molecular weight of about 600 to 6000; R is a divalent radical remaining after removal of carboxyl groups from at least one dicarboxylic acid having a molecular weight of less than about 300; and D is a divalent radical remaining after removal of hydroxyl groups from at least one diol having a molecular weight less than 250.

Preferred copolyesters are the polyether ester polymers derived from terephthalic acid, polytetramethylene ether glycol and 1,4-butane diol. These are random block copolymers having crystalline hard blocks with the repeating unit: 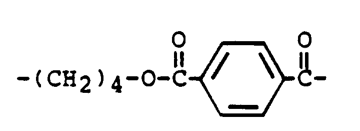
and amorphous, elastomeric polytetramethylene ether terephthalate soft blocks of repeating unit 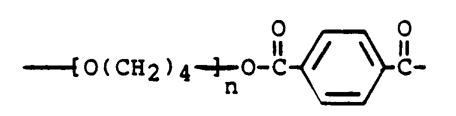
having a molecular weight of about 600 to 3000, i.e. n = 6 to 40.

Other preferred aliphatic polymers include those based on polyether and polyamide blocks, especially the so called a "polyether-ester amide block copolymers" of repeating unit: 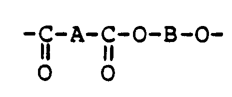
wherein A represents a polyamide sequence of average molecular weight in the range of from 300 to 15,000, preferably from 800 to 5000; and B represents a linear or branched polyoxyalkylene sequence of average molecular weight in the range of from 200 to 6000, preferably from 400 to 3000.

Preferably the polyamide sequence is formed from alpha,omega-aminocarboxylic acids, lactams or diamine/dicarboxylic acid combinations having C₄ to C₁₄ carbon chains, and the polyoxyalkylene sequence is based on ethylene glycol, propylene glycol and/or tetramethylene glycol, and the polyoxyalkylene sequence constitutes from 5 to 85%, especially from 10 to 50% of the total block copolymer by weight. These polymers and their preparation are described in UK Patent Specifications Nos. 1,473,972, 1,532,930, 1,555,644, 2,005,283A and 2,011,450A.

Other aliphatic polymers e.g. poly 1,12-dodecamethylene pyromellitimide or 1,13-tridecamethylene pyromellitimide, as described in U.S. patent No. 3,551,200, may be used.

The aliphatic polymer preferably has a C:H ratio of not more than 0.9, more preferably not more than 0.75, most preferably not more than 0.65 and especially not more than 0.55.

The polymer blends that are used in the wire and cable according to the invention have the advantage that they generally exhibit significantly reduced susceptibility to tracking and to arcing. In particular, we have found that the propensity of the polymer blend to char when subjected to elevated temperatures, and accordingly the degree of tracking and arcing of the blend, is often reduced disproportionately to the quantity of aliphatic polymer in the blend. Thus it is possible to form blends of polymers with desirable physical and mechanical properties but without the tendency of the polymer to track and arc. For example the polymeric material (including any fillers) will preferably have an elongation to break of at least 50% and especially at least 100% and a cut through value at 150°C of at least 15, preferably at least 20 N.

In addition to the reduction in the tracking and arcing of the polymer blends, at least some of the polymeric blends used in the present invention exhibit a significantly reduced tendency to erode than the same or similar polymer systems that are not crosslinked. Erosion is a phenomenon in which insulating material is removed by a vaporisation process originated by an electrical discharge without the formation of electrically conductive deposits, so that failure of the insulation will not occur until complete puncture of the insulation occurs. The idealised concept does not always occur in practice, and many materials may exhibit both tracking and erosion. The two phenomena are distinguished from each other in that tracking (and arcing) are phenomena which produce a conducting char, often with little volume change in the insulation, whereas pure erosion can generate significant volume changes in the insulation with no conducting char, and may be tested for by determining the change in weight of the insulation or rate at which material is lost during this process (erosion rate). Examples of this reduction in erosion rate are given in our co-pending application entitled "Electrical Wire and Cable" and filed on even date herewith and claiming priority from British application No. 8716304.

The purpose and construction of the tracking control layer will depend principally on its location. The purpose of such a layer that is located between the conductor and layer (a) is to control the growth of the arc roots. Control of the diameter of the arc root is extremely important in the suppression of arcing. This is because the maximum current density of the arc falls from a value of about 10⁸ Am⁻² in the case of copper-copper electrodes to a value of about 5x10⁴ Am⁻² for carbon-carbon electrodes. Thus, in the case where polymer degradation produces carbon deposits on the conductors the cross-sectional area of the arc must increase by the order of 10⁴ times in order for the arc to carry a constant total current. Arc size control may be achieved in any of a number of ways:
(a) The arc diameter may be controlled by the provision of an adherent refractory layer on the electrical conductor, which will aid quick conductor melting and severence before more extensive wire or bundle damage can occur. Thus, for example, a layer of alumina, silica, silicon nitride, aluminium nitride, and titanium dioxide may be applied by any appropriate means, for example a vapour deposition method. Examples of such methods includes sputtering, chemical vapour deposition, flame spraying, plasma ashing, reactive ion plating, electron beam evaporation or by other techniques. Examples of refractory coatings and methods of forming them on a conductor are described in our British patent application No. 2,144,260A, the disclosure of which is incorporated herein by reference.
(b) The arc may be controlled by providing a layer that produces little or no carbon during pyrolysis. Examples of such polymers include the aliphatic polymers mentioned above for incorporation in layer (a).
(c) The arc may be quenched by the provision of an electronegative gas, for example produced by the decomposition of a halogen-containing material. This may be achieved by forming the layer from a halogenated polymer, especially a fluorinated polymer e.g. polyvinylidene fluoride, an ethylene-tetrafluoroethylene copolymer or polytetrafluoroethylene.

The thickness of any underlying tracking-control layer will depend on, amongst other things, the material from which it is formed. In the case of refractory layers, the thickness will normally be in the range of from 0.1 to 10 micrometres, and the layer will preferably adhere to the electrical conductor. For other materials e.g. aliphatic polymers, thicknesses up to 100 micrometres may be used.

A tracking control layer may be provided on top of the blend layer (a) in addition to, or instead of, any tracking control layer provided underneath the layer (a). The purpose of any overlying tracking control layer is to prevent or reduce the tendency of the wire to fail due to wet tracking described above.

Preferred polymers from which this layer may be formed include the aliphatic polymers mentioned above for incorporation in layer (a) and halogenated polymers. The aliphatic polymer may be unsubstituted or substituted. One class of aliphatic polymer that is particularly useful is the fluorinated polymers, preferably those containing at least 10%, more preferably at least 25% fluorine by weight. The fluorinated polymer may be a single fluorine containing polymer or a mixture of polymers one or more of which contains fluorine. The fluorinated polymers are usually homo-or copolymers of one or more fluorinated, often perfluorinated, olefinically unsaturated monomers or copolymers of such a comonomer with a non-fluorinated olefin. The fluorinated polymer preferably has a melting point of at least 150°C, often at least 250°C and often up to 350°C, and a viscosity (before any crosslinking) of less than 10⁴ Pa.s at a temperature of not more than 60°C above its melting point. Preferred fluorinated polymers are homo-or copolymers of tetrafluoroethylene, vinylidine fluoride or hexafluoropropylene, and especially ethylene/tetrafluoroethylene copolymers e.g. containing 35 to 60% ethylene, 35 to 60% tetrafluoroethylene by mole and up to 10% by mole of other comonomers, polyvinylidine fluoride, copolymers of vinylidine fluoride with hexafluoropropylene, tetrafluoroethylene and/or hexafluoroisobutylene, polyhexafluoropropylene, and copolymers of hexafluoropropylene and tetrafluoroethylene. In addition, C₁ - C₅ perfluoroalkoxy substituted perfluoroethylene homopolymers and copolymers with the above fluorinated comonomers may be used.

The overlying tracking control layer may have a thickness of up to 100 micrometres, e.g. from 50 to 100 micrometres in the case of a polymeric layer. Thinner tracking control layers may be provided by other means although thicker layers may be appropriate in certain circumstances.

The tracking control layer may even contain a proportion of aromatic polymer, for example it may be formed from a blend of an aromatic polymer mentioned above for layer (a) and one or more of the aliphatic polymers mentioned above, but in which the polymers are so chosen, and/or the relative proportion of the polymers is so chosen that the tracking control layer has a greater resistance to arcing (or arc-tracking) or to wet-tracking than layer (a). Preferably the tracking control layer, wherever it is located, has a comparative tracking index (CTI) as explained below, of at least 300, more preferably at least 400, especially at least 500 and most especially at least 600. This normally will mean that the material from which the tracking control layer is formed will have a carbonaceous char residue of not more than 10%, more preferably not more than 5%, most preferably not more than 2% and especially 0% by weight.

As stated above, the aliphatic/aromatic blend is cross-linked. In general, however, the aromatic polymers will exhibit a lower degree of crosslinking than the aliphatic polymers, and in many cases the aliphatic polymers may be highly crosslinked while the aromatic polymers remain substantially uncrosslinked.

The polymeric composition may be cross-linked, for example, by exposure to high energy radiation.

Radiation cross-linking may be effected by exposure to high energy irradiation such as an electron beam or gamma-rays. Radiation dosages in the range 20 to 800 kGy, preferably 20 to 500 kGy, e.g. 20 to 200 kGy and particularly 40 to 120 kGy are in general appropriate depending on the characteristics of the polymer in question. For the purposes of promoting cross-linking during irradiation, preferably from 0.2 to 15 weight per cent of a prorad such as a polyfunctional vinyl or allyl compound, for example, triallyl cyanurate, triallyl isocyanurate (TAIC), methylene bis acrylamide, metaphenylene diamine bis maleimide or other crosslinking agents, for example as described in U.S. patents Nos. 4,121,001 and 4,176,027, are incorporated into the composition prior to irradiation.

The polymers used for the various layers may include additional additives, for example reinforcing or non-reinforcing fillers, stabilisers such as ultraviolet stabilisers, antioxidants, acid acceptors and anti-hydrolysis stabilisers, pigments, processing aids such as plasticizers, halogenated or non-halogenated flame retardants e.g. hydrated metal oxides such as alumina trihydrate and magnesium hydroxide or decabromodiphenyl ether, fungicides and the like.

The wires and cables according to the invention may be formed by conventional techniques. For example the polymers may be blended together if necessary in a mixer, together with any additional components, pelletised, and then extruded onto a wire conductor and, for this reason it is preferred for the polymers to be melt-shapeable so that the wire insulation can be formed by extrusion.

The wires may be used individually as equipment or "hook-up" wires, or airframe wires, or in bundles and harnesses, both jacketted and unjacketted, and may be used in multiconductor cables. The wires, harnesses or cables may be unscreened or they may be provided with a screen to protect them from electromagnetic interference, as well known in the art. In addition flat cables may be formed using the insulation materials according to the invention, either employing flat conductors or round conductors.

The invention will be described by way of example with reference to the accompanying drawings in which:
- Figure 1: is an isometric view of part of an electrical wire according to the invention;
- Figure 2: is a schematic view of the test arrangement for wet tracking; and
- Figure 3: is a schematic view of the test arrangement for dry arcing.

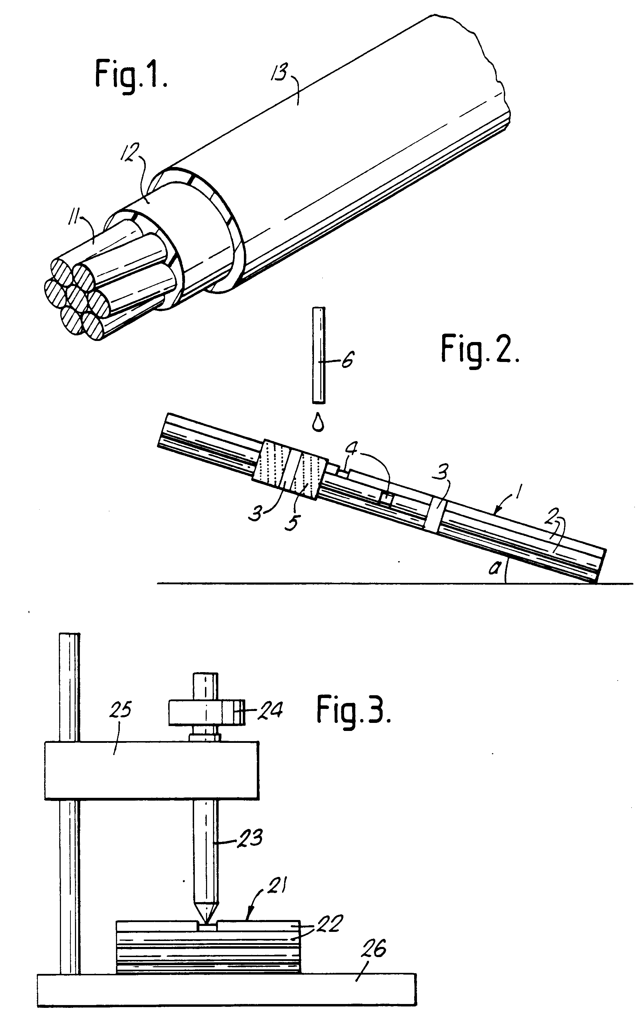

Referring initially to figure 1 of the accompanying drawings an electrical wire comprises a conductor 11 which may be solid or stranded as shown and is optionally tinned. On the conductor an inner insulating layer 12 or primary insulation has been extruded. The insulation is formed from nylon 12 or a blend of nylon 12 with a polyaryl ether imide which contains about 5% by weight triallyl isocyanurate crosslinking promotor. After the inner layer 12 has been formed an outer layer 13 or primary jacket formed from an ethylene-tetrafluoroethylene copolymer, containing about, 7% by weight triallyl isocyanurate cross-linking promotor, is extruded on the inner layer 12. Each layer has a wall thickness of about 100 µm. After both layers have been extruded the insulation is irradiated by high energy electrons to a dose of about 120 kGy.

The following Examples illustrate the invention:

### WET TRACKING TEST

This test is designed to simulate the condition occuring when a damaged wire bundle comes into contact with an electrolyte. Under actual conditions, the electrolyte may be moisture containing dust particles or other ionic contaminant. Damage to the bundle may occur through a number of reasons e.g. abrasion, hydrolysis of the insulation, ageing, etc. Current flow through the electrolyte results in heating and evaporation of the solution. This causes one or more dry bands to appear across which the test voltage is dropped, resulting in small, often intense, scintillations which damage the insulation.

Figure 2 shows the sample set-up. A wire bundle 1 is prepared from seven 18cm lengths 2 of 20AWG tinned-copper conductor coated with a layer of the material under test. The bundle 1 is arranged with six wires around one central wire and is held together using tie wraps 3 so that the wires are not twisted. Two adjacent wires are notched circumferentially to expose 0.5mm bare conductor on each wire. The notches 4 are arranged such that they are 5mm apart with the tie wraps 5mm either side of them. One end of each wire is stripped to enable connections to be made to the power supply via insulated crocodile clips. The sample is held at an angle of 30 degrees to the horizontal using a simple clamp made of an electrically insulating resin so that the damaged wires are uppermost and the stripped ends are at the upper end of the bundle. A piece of filter paper 5 20 x 10mm wide is wrapped around the bundle approximately 2mm above the upper notch; this is best held in place with the upper tie wrap.

A peristaltic pump conveys the electrolyte from the reservoir to the sample via a dropping pipette 6, and a power supply is provided to energise the bundle. The electrolyte used is 2% sodium chloride and optionally 0.02% of an ammonium perfluoroalkyl carboxylate surfactant in distilled or deionised water. The pump is set to deliver this solution at a rate of approximately 100mg per minute through the pipette 6 which is positioned 10mm vertically above the filter paper 5.

The power is supplied by a 3-phase 400Hz 115/200V generator of at least 5kVA capacity or a single phase 50Hz 115V transformer of at least 3kVA capacity. A device for recording time to failure is provided which records the time when either a wire goes open circuit, or when a circuit breaker comes out. Leakage currents can be followed with the use of current clamps surrounding the wires and connected to a suitable oscilloscope.

In the case of the three phase supply, adjacent wires of the bundle are connected to alternate phases of the power supply via 7.5A aircraft-type circuit breakers e.g. Klixon with the central wire connected directly to neutral. In the case of the single phase supply, alternate wires are connected to neutral with the remaining wires including the central conductor to live. A few drops of electrolyte are allowed to fall onto the filter paper to ensure saturation prior to starting the test. The power is switched on and the timer started. The test is allowed to continue until:
a) one or more circuit breakers come out;
b) a wire becomes open circuit; or
c) 8 hours have elapsed.

The condition of the final bundle and the time to failure is noted in all cases. Where failure has occurred due to breakers coming out, the power is then reapplied and each breaker is reclosed in turn until there is no further activity. The condition of the bundle is again noted.

Failure due to the wire becoming open circuit (result (b)) is indicative of erosion. If failure occurs due to one or more circuit breakers coming out (result (a)) then the absence of further crepitation on resetting of the circuit breakers indicates failure due to erosion, while further crepitation indicates tracking failure.

### Dry Arc Test

This test is designed to simulate what happens when a fault in a wire bundle causes arcing under dry conditions. A graphite rod is used to initiate the arc which causes thermal degradation of the insulation. Continuation of the fault current can only occur through the wire bundle under test due to shorting across adjacent phases through a conductive char, or direct conductor-conductor contact such as might occur if the insulation is totally removed by the duration of the arc.

Figure 3 shows the sample set-up. A wire bundle 21 is prepared from seven 10cm lengths 22 of 20AWG tinned-copper conductor coated with a layer of the material under test. The bundle 22 is arranged with six wires around one central wire and held together with tie wraps spaced about 5cm apart. One of the outer wires is notched circumferentially between the tie wraps to expose 0.5mm bare conductor and one end of each wire is stripped to enable connections to be made via insulating crocodile clips.

A rod 23 is provided which is made of a spectrographically pure graphite, diameter 4.6mm, with an impurity level not more than 20ppm. It is prepared before each test by sharpening one end using a conventional pencil sharpener of European design to give an angle of 10 degrees off vertical with a tip diameter of 0.4±0.1mm. A 100g weight 24 is clamped onto the top of the rod 23 to maintain contact during the arc initiation and also acts as a device to limit the depth of penetration of the rod by restricting its downward travel. The rod passes through a PTFE bush which allows it to slide freely up and down.

The arrangement of levers enables precise positioning of the rod 23 on the wire bundle 21 which is held securely in place by means of a simple clamp 25 made of an electrically insulating resin and mounted on a block 26 made of the same material.

The power source can be either:
a) a 3-phase 400Hz 115/200V generator of at least 5kVA capacity
b) a single phase 50Hz 115V transformer, at least 3kVA capacity
c) 24V d.c. supplied by two 12V accumulators.

The fault current is detected by means of current clamps surrounding the connecting leads and the voltage at failure is measured using a 10:1 voltage probe. The transducer signals are fed into a multi-channel digital storage oscilloscope where they can be displayed and manipulated to obtain power curves (voltage x current) and energy (integration of power curve).

The wire bundle 21 is positioned in the clamp 25 so that the notched wire is uppermost. Adjacent wires of the bundle are connected to different phases of the supply through 7.5A aircraft type circuit breakers, and the central wire is connected directly to neutral. In the case of single phase or d.c. supplies, alternate wires are connected to neutral or the negative terminal, with the remaining wires, including the central wire, connected through circuit breakers to live or the postive terminal. The carbon rod is also connected to neutral or the negative terminal and positioned so that the point is in contact with the exposed conductor. The gap between the 100g weight and the PTFE bush is adjusted to 0.4 mm using a suitable spacer to limit the penetration of the rod into the sample. A voltage probe is connected across the damaged wire and the rod, and current clamps positioned on each of the three phases, or on the wires connected to the live side of the supply. A protective screen is placed in front of the test set-up and the power switched on. A material is deemed to pass this test if:
a) no circuit breakers come out and the activity is relatively non-eventful, or
b) there is no further activity on resetting the breakers after a non-eventful test.

In addition, non-tracking materials will have relatively few spikes in the current trace with a correspondingly low total energy consumed. Tracking materials, on the other hand, show many spikes usually on all three phases, which are accompanied by violent crepitation and large energy consumption.

### CTI Test

This method is a modification of IEC 112 which measures the low voltage track resistance (up to 600V) as Comparative Tracking Index (CTI) of materials in the presence of an aqueous contaminant.

The samples are prepared by extruding tapes of the required composition approximately 0.5 mm thick and of sufficient width to ensure that during the test no liquid flows over the edge of the sample. Before testing, the surface of the sample is cleaned with methanol to remove any surface contamination.

The test apparatus is as described in IEC 112. It consists of two platinum electrodes, each with one end chisel-shaped to an angle of 30 degrees. The electrodes are symmetrically arranged such that the opposing chisel faces are vertical and 4.0±0.1mm apart when placed on the surface of the specimen.

The power supply consists of a 0.5kVA transformer capable of supplying an a.c. voltage in the range 100-600V at 50Hz. A rheostat is incorporated into the circuit so that the short circuit current may be adjusted to give 1.0±0.1 amp. An over-current relay is provided which shuts off the HV supply when a current of at least 0.5 amps flows for 2 seconds, the criteria for failure.

A device for dropping electrolyte solution between the electrodes is provided. This consists of a peristaltic pump which draws liquid from a reservoir and pumps it out of a needle situated at height of 30-40mm above and between the electrodes. The dropping rate is set to 1 drop every 30±5 seconds with a drop volume of 20±3 mm³. Before the test, the needle is cleaned and purged with several drops of electrolyte to ensure the correct concentration of reagent is used.

The electrolyte solution used in these tests is 0.1±0.002% ammonium chloride and 0.01% sodium dodecyl sulphate surfactant in deionised water and has a resistivity of 405±5 ohm.cm at 23°C.

By using a surfactant, reproducible results have been obtained on homogeneous samples. However, the type of surfactant used can greatly affect the CTI values obtained. Sodium dodecyl sulphate was chosen as this gave a working range of below 150V (for known badly tracking materials) to above 600V for non-tracking materials.

### Test Procedure

The specimen is put into position and the electrodes lowered on to the surface. A suitable voltage is chosen and the short circuit current adjusted accordingly. The electrolyte is then allowed to drop between the electrodes until either
a) tracking occurs
b) at 600V, the sample withstands 50 drops.

For those materials which track, the test is then repeated at at least three other voltages such that two voltages give results above 50 drops, and two give results below 50 drops. A curve of drops to failure versus applied voltage is plotted from which is read the voltage at which 50 drops would cause failure. This voltage is the comparative tracking index (CTI).

For those materials which withstand 50 drops at 600V, CTI is then quoted as >600 and the erosion rate of the sample is determined by measuring the thickness of the material and the time taken for the electrodes to penetrate through to the base at 400V. Erosion rate is then quoted as mm minute⁻¹.

The following wire constructions were prepared by use of a 20mm Baughan extruder for the polymeric layers and by sputtering for the inorganic layers. The polymer blends were pre-mixed using a Baker Perkins twin screw extruder. The conductor was 22 AWG nickel plated copper for Examples 1 to 8, and 20 AWG tinned copper for Examples 9 to 12.

The polymers used in the examples are defined below:
Aromatic-aliphatic polyamide: A polymer formed from a mixture of 2,2,4- and 2,4,4-trimethylhexamethylene-diamine and terephthalic acid.
Ionomer resin: Surlyn 9090 from DuPont.
Polyetherblock amide: A polymer having a repeat unit of the formula: 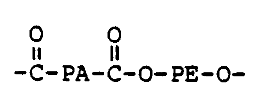
where PA represents the polyamide segment and PE represents the polyether segment.
Polyetherimide: A polymer having a repeat unit of the formula: 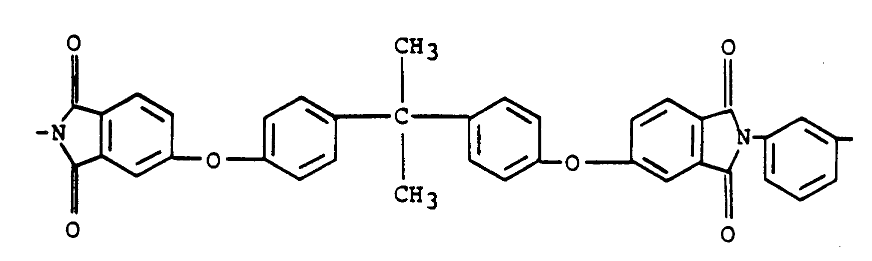
Polyarylate: A polymer having a repeat unit of the formula:

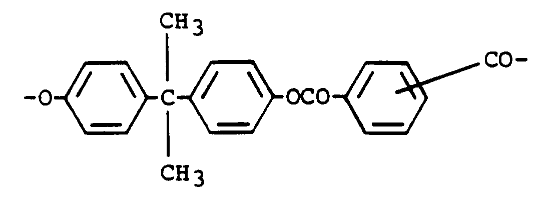

### Example 1

100µm of a blend of polyarylate, polyetherblock amide and TAIC (in the ratio of 60:40:5 by weight) as the inner layer with 100µm crosslinked ethylenetetrafluoroethylene as the outer layer.

### Example 2

100µm of a blend of polyarylate, polyetherblock amide, nylon 12 and TAIC in the ratio of 58.3:8.3:28.3:5 by weight) as the inner layer. Outer layer as Example 1.

### Example 3

100µm of a blend of polyarylate, nylon 12 and TAIC (in the ratio 60:40:5 by weight) as the inner layer. Outer layer as Example 1.

| Example | Inner Layer | Outer Layer | Dry Tracking Test Results (50Hz, 115V) | | CTI (V) |
|---|---|---|---|---|---|
| | | | Initial Energy (J) | No. of Circuit Breakers Out | |
| 1 | Polyarylate/Polyetherblock amide | Crosslinked ETFE | 54 | 0 | >600 (outer layer) |
| 2 | Polyarylate/Polyetherblock amide/Nylon 12 | Crosslinked ETFE | 200 | 0 | >600 (outer layer) |
| 3 | Polyarylate/Nylon 12 | Crosslinked ETFE | 165 | 0 | >600 (outer layer) |

### Example 4

100µm of a blend of a polyarylate, a block copolymer of polybutylene oxide terephthalate and polybutylene terephthalate and TAIC (in the weight ration 47.5:47.5:5), and 100µm of crosslinked ethylene/tetrafluoroethylene copolymer as the outer layer.

### Example 5

100µm of a blend of polyetherimide, nylon 12 and TAIC in the ration of 37.5:57.5:5, and 100µm of crosslinked ethylene/tetrafluoroethylene as the outer layer

| Example | Inner Layer | Outer Layer | Wet Tracking Test Results (115V 400HZ) 3 phase | | CTI (V) |
|---|---|---|---|---|---|
| | | | Circuit Breakers out | Time to 1st open circuit(s) | |
| 4 | Polyarylate/PBT-PBO | ETFE | 0 | 3960 | >600 (outer layer) |
| 5 | Polyetherimide/nylon 12 | ETFE | 0 | 3500 | >600 (outer layer) |

## Claims

1. An electrical wire which comprises an elongate electrical conductor and electrical insulation comprising:
(a) an aromatic layer; and
(b) a tracking control layer located on top of layer (a)
characterised in that layer (a) comprises a crosslinked blend of an aromatic polymer and a polymer containing aliphatic moities.

2. A wire as claimed in claim 1, wherein the aromatic polymer has a char residue of at least 25% by weight.

3. A wire as claimed in claim 2, wherein the aromatic polymer has a char residue of at least 50% by weight.

4. A wire as claimed in any one of claims 1 to 3, wherein the aromatic polymer has a molar carbon to hydrogen ratio of at least 1.3.

5. A wire as claimed in any one of claims 1 to 4, wherein the aromatic polymer comprises:
i) units of the general formula:
-Ar-Q-
the units being the same or different,
wherein Ar represents an unsubstituted or substituted divalent aromatic radical and Q represents -O-, -S-, -SO₂-, -CO-, -NH-CO- or -COO-, or Ar represents a polyvalent radical and Q represents 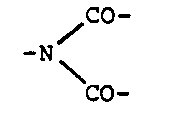 the Q radical preferably being bonded directly to an aromatic carbon atoms;
ii) a crystalline polyarylene ether comprising recurring units of the formula:
-O-E-O-E'-
wherein E is the residue of a dihydric phenol and E' is the residue of an aromatic compound having an electron withdrawing group in at least one of the positions ortho and para to the valence bonds, the E and E' radicals being linked to the -O- radicals through aromatic carbon atoms; or
iii) polyether imide or polysulphone imide which comprises recurring units of the formula 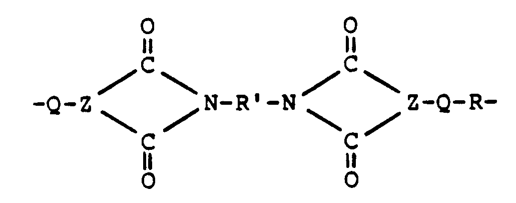 where Q is -O- or -SO₂, z is a trivalent aromatic radical, R is a divalent aromatic radical and R' is a divalent organic radical.

6. A wire as claimed in claim 4, wherein the aromatic polymer comprises a polymer having a repeating unit of the formula: 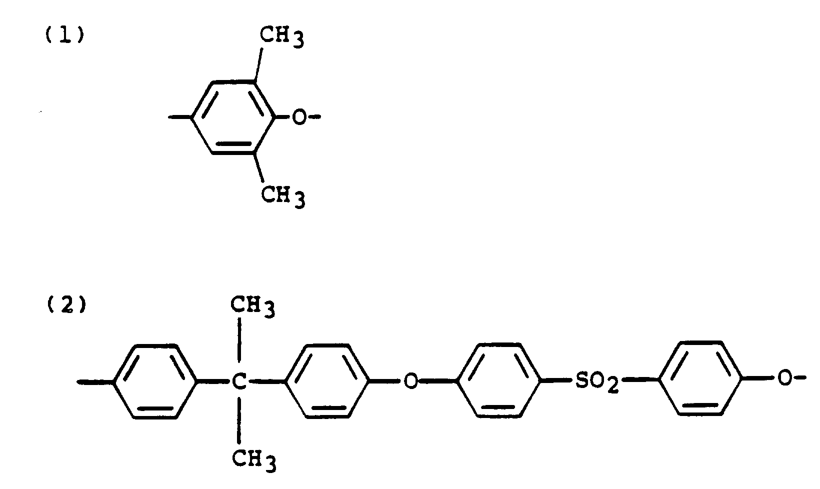 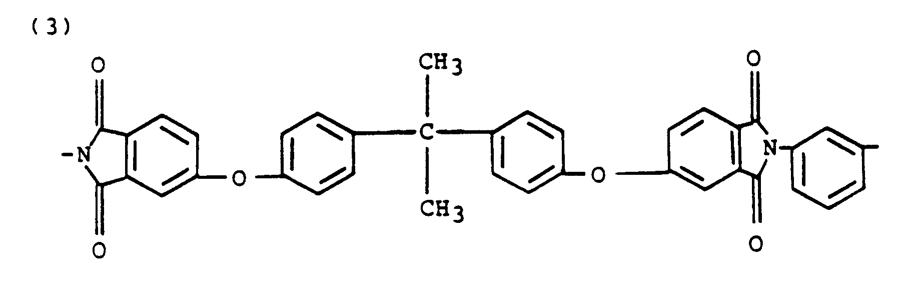 or 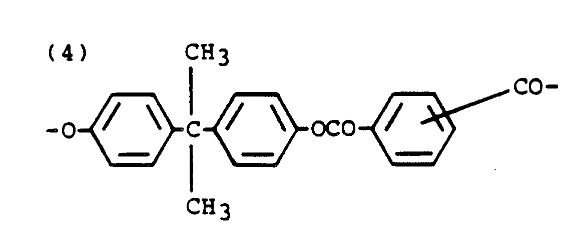 in which the units may be derived wholly from terephthalic acid or isophthalic acid or both.

7. A wire as claimed in any one of claims 1 to 6, wherein the polymer containing aliphatic moieties has a char residue of not more than 10% by weight.

8. A wire as claimed in claim 7, wherein the polymer containing aliphatic moieties has a char residue of not more than 5% by weight.

9. A wire as claimed in any one of claims 1 to 8, wherein the polymer having aliphatic moieties has a molar carbon to hydrogen ratio of not more than 1.0.

10. A wire as claimed in claim 9, wherein the polymer having aliphatic moieties has a molar carbon to hydrogen ratio of not more than 0.75.

11. A wire as claimed in any one of claims 1 to 10, wherein the polymer having aliphatic moieties comprises a polyolefin, a copolymer of an olefin with an olefin, an alkyl acetate, an alkyl acrylate or a vinyl ester; a polyamide, a polyether, a polyester, an ionomer or an acrylic rubber.

12. A wire as claimed in claim 11, wherein the polymer having aromatic moieties comprises polyethylene, a crystalline polyamide, an amorphous aromatic/aliphatic polyamide, an ionomer based on a metal salt of methacrylated polyethylene, polybutylene terephthalate, a styrene/diene di or tri-block copolymer or hydrogenated version thereof or a block copolymer having long-chain ester units of the general formula: 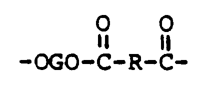 and short-chain ester units of the formula 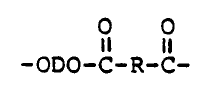 in which G is a divalent radical remaining after the removal of terminal hydroxyl groups from a polyalkylene oxide) glycol, preferably a poly (C₂ to C₄ alkylene oxide) having a molecular weight of about 600 to 6000; R is a divalent radical remaining after removal of carboxyl groups from at least one dicarboxylic acid having a molecular weight of less than about 300; and D is a divalent radical remaining after removal of hydroxyl groups from at least one diol having a molecular weight less than 250.

13. A wire as claimed in any one of claims 1 to 12, wherein the blend of layer (a) has an overall molar carbon to hydrogen ratio of not more than 1.15.

14. A wire as claimed in any one of claims 1 to 13, wherein the blend of layer (a) contains at least 20% by weight of the aromatic polymer.

15. A wire as claimed in any one of claims 1 to 14, wherein the tracking control layer (b) comprises a polymer having a CTI of at least 400.

16. A wire as claimed in any one of claims 1 to 15, wherein the tracking control layer (b) has a char residue of not more than 5% by weight.

17. A wire as claimed in any one of claims 1 to 16, wherein the tracking control layer (b) has a molar C:H ratio of not more than 1.15.

18. A wire as claimed in any one of claims 1 to 17, wherein the tracking control layer (b) comprises a fluoropolymer, a polyolefin, a copolymer of an olelin with an olefin, an alkyl acetate, an alkyl acrylate or a vinyl ester; a polyamide, a polyether, a polyester, an ionomer or an acrylic rubber.

## Patentansprüche

1. Elektrischer Draht, der einen langgestreckten elektrischen Leiter und elektrische Isolierung hat, die aufweist:
(a) eine aromatische Schicht; und
(b) eine Kriechwegbildung-Kontrollschicht, die auf der Oberseite der Schicht (a) angeordnet ist,
dadurch gekennzeichnet, daß Schicht (a) ein vernetztes Gemisch aus einem aromatischen Polymer und einem aliphatische Anteile enthaltenden Polymer aufweist.

2. Draht nach Anspruch 1, wobei das aromatische Polymer einen Verkohlungsrückstand von mindestens 25 Gew.-% hat.

3. Draht nach Anspruch 2, wobei das aromatische Polymer einen Verkohlungsrückstand von mindestens 50 Gew.-% hat.

4. Draht nach einem der Ansprüche 1 bis 3, wobei das aromatische Polymer ein Kohlenstoff/Wasserstoff-Molverhältnis von mindestens 1,3 hat.

5. Draht nach einem der Ansprüche 1 bis 4, wobei das aromatische Polymer aufweist:
i) Einheiten der allgemeinen Formel:
-Ar-Q-
wobei die Einheiten gleich oder verschieden sind,
wobei Ar einen unsubstituierten oder substituierten zweiwertigen aromatischen Rest darstellt und Q -O-, -S-, -SO₂-, -CO-, -NH-CO- oder -COO-- darstellt oder Ar einen mehrwertigen Rest darstellt und Q 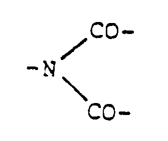 darstellt, wobei der Q-Rest bevorzugt direkt an ein aromatisches Kohlenstoffatom gebunden ist;
ii) einen kristallinen Polyarylenether, der sich wiederholende Einheiten der Formel aufweist:
-O-E-O-E'-,
wobei E der Rest eines Zweiwertigen Phenols ist und E' der Rest einer aromatischen Verbindung ist, die eine Elektronen abziehende Gruppe in mindestens einer von den Stellungen ortho und para an den Valenzbindungen hat, wobei die E- und E'-Reste mit den -O-Resten durch aromatische Kohlenstoffatome verbunden sind; oder
iii) Polyetherimid oder Polysulfonimid, das sich wiederholende Einheiten der Formel aufweist: 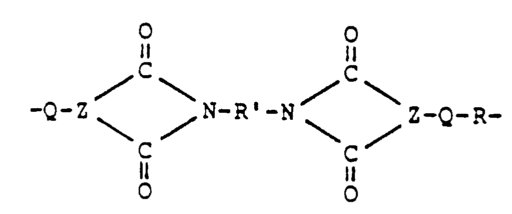 wobei Q -O- oder -SO₂ ist, z ein dreiwertiger aromatischer Rest ist, R ein zweiwertiger aromatischer Rest ist und R' ein Zweiwertiger organischer Rest ist.

6. Draht nach Anspruch 4, wobei das aromatische Polymer ein Polymer aufweist, das eine sich wiederholende Einheit der Formel hat: 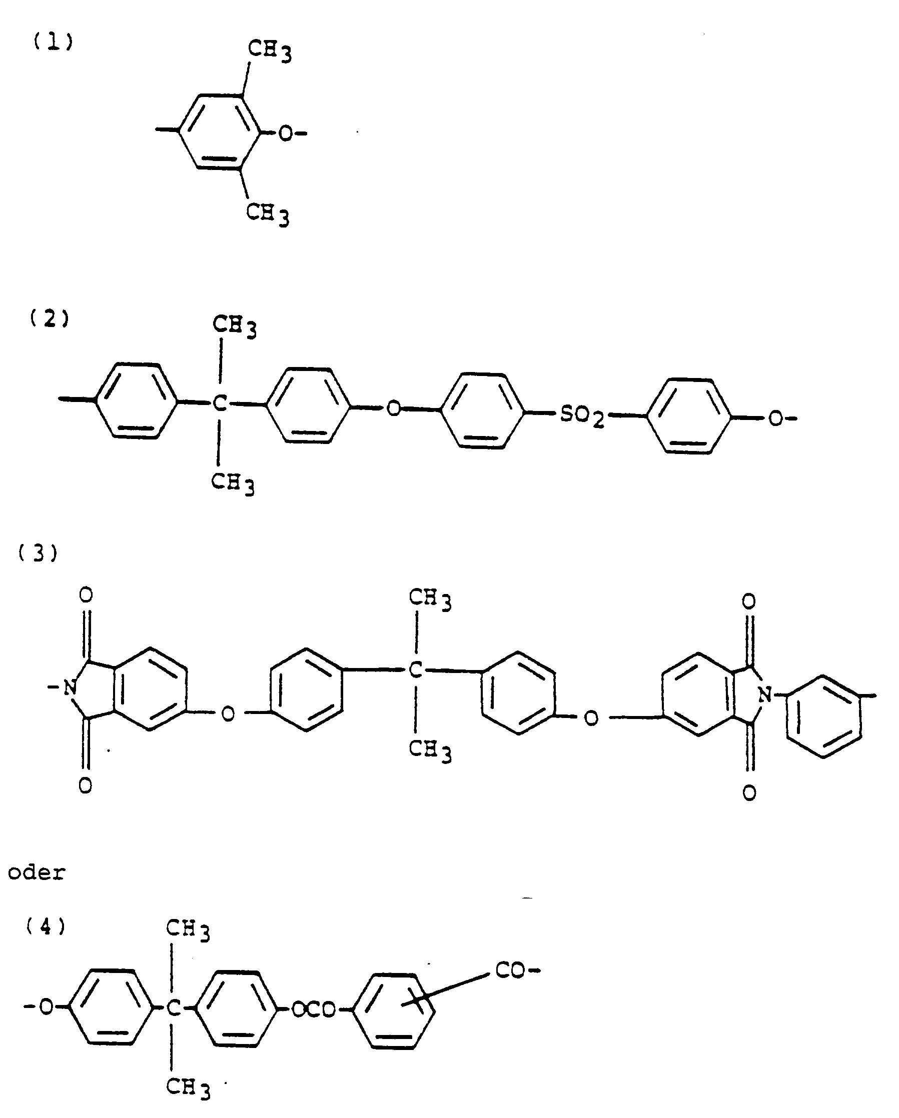 wobei die Einheiten vollständig von Terephthalsäure oder Isophthalsäure oder beiden abgeleitet sein können.

7. Draht nach einem der Ansprüche 1 bis 6, wobei das aliphatische Anteile enthaltende Polymer einen Verkohlungsrückstand von nicht mehr als 10 Gew.-% hat.

8. Draht nach Anspruch 7, wobei das aliphatische Anteile enthaltende Polymer einen Verkohlungsrückstand von nicht mehr als 5 Gew.-% hat.

9. Draht nach einem der Ansprüche 1 bis 8, wobei das Polymer mit aliphatischen Anteilen ein Kohlenstoff/Wasserstoff-Molverhältnis von nicht mehr als 1,0 hat.

10. Draht nach Anspruch 9, wobei das Polymer mit aliphatischen Anteilen ein Kohlenstoff/Wasserstoff-Molverhältnis von nicht mehr als 0,75 hat.

11. Draht nach einem der Ansprüche 1 bis 10, wobei das Polymer mit aliphatischen Anteilen aufweist: ein Polyolefin, ein Copolymer eines Olefins mit einem Olefin, einem Alkylacetat, einem Alkylacrylat oder einem Vinylester; ein Polyamid, einen Polyether, einen Polyester, ein Ionomer oder einen Acrylkautschuk.

12. Draht nach Anspruch 11, wobei das Polymer mit aromatischen Anteilen aufweist: Polyethylen, ein kristallines Polyamid, ein amorphes aromatisches/aliphatisches Polyamid, ein Ionomer auf der Basis eines Metallsalzes von methacryliertem Polyethylen, Polybutylenterephthalat, einem Styrol/Dien-Di- oder -Triblockcopolymer oder einer hydrierten Version davon oder ein Blockcopolymer mit langkettigen Estereinheiten der allgemeinen Formel: 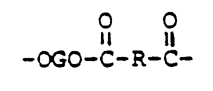 und kurzkettigen Estereinheiten der Formel 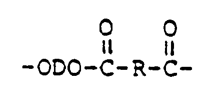 wobei G ein Zweiwertiger Rest ist, der nach dem Entfernen von endständigen Hydroxylgruppen aus einem Poly(alkylenoxid)-glykol, bevorzugt einem Poly(C₂-C₄-alkylenoxid) mit einem Molekulargewicht von ca. 600 bis 6000 verbleibt; R ein zweiwertiger Rest ist, der nach Entfernen von Carboxylgruppen aus mindestens einer Dicarbonsäure mit einem Molekulargewicht von weniger als ca. 300 verbleibt; und D ein zweiwertiger Rest ist, der nach Entfernen von Hydroxylgruppen aus mindestens einem Diol mit einem Molekulargewicht von weniger als 250 verbleibt.

13. Draht nach einem der Ansprüche 1 bis 12, wobei das Gemisch von Schicht (a) ein Kohlenstoff/Wasserstoff-Gesamtmolverhältnis von nicht mehr als 1,15 hat.

14. Draht nach einem der Ansprüche 1 bis 13, wobei das Gemisch von Schicht (a) mindestens 20 Gew.-% des aromatischen Polymers enthält.

15. Draht nach einem der Ansprüche 1 bis 14, wobei die Kriechwegbildung-Kontrollschicht (b) ein Polymer aufweist, das einen CTI von mindestens 400 hat.

16. Draht nach einem der Ansprüche 1 bis 15, wobei die Kriechwegbildung-Kontrollschicht (b) einen Verkohlungsrückstand von nicht mehr als 5 Gew.-% hat.

17. Draht nach einem der Ansprüche 1 bis 16, wobei die Kriechwegbildung-Kontrollschicht (b) ein C:H-Molverhältnis von nicht mehr als 1,15 hat.

18. Draht nach einem der Ansprüche 1 bis 17, wobei die Kriechwegbildung-Kontrollschicht (b) aufweist: ein Fluorpolymer, eine Polyolefin, ein Copolymer eines Olefins mit einem Olefin, einem Alkylacetat, einem Alkylacrylat oder einem Vinylester; ein Polyamid, einen Polyether, einen Polyester, ein Ionomer oder einen Acrylkautschuk.

## Revendications

1. Fil électrique qui comprend un conducteur électrique allongé et un isolant électrique, comprenant :
(a) une couche d'un polymère aromatique ; et
(b) une couche de limitation de cheminement située au-dessus de la couche (a),
caractérisé en ce que la couche (a) comprend un mélange réticulé d'un polymère aromatique et d'un polymère contenant des groupements aliphatiques.

2. Fil suivant la revendication 1, dans lequel le polymère aromatique possède une quantité de résidu charbonneux d'au moins 25 % en poids.

3. Fil suivant la revendication 2, dans lequel le polymère aromatique possède une quantité de résidu charbonneux d'au moins 50 % en poids.

4. Fil suivant l'une quelconque des revendications 1 à 3, dans lequel le polymère aromatique possède un rapport molaire du carbone à l'hydrogène d'au moins 1,3.

5. Fil suivant l'une quelconque des revendications 1 à 4, dans lequel le polymère aromatique comprend :
i) des motifs de formule générale :
-Ar-Q-
les motifs étant identiques ou différents,
formule dans laquelle Ar représente un radical aromatique divalent non substitué ou substitué et Q représente -O-, -S-, un groupe -SO₂-, -CO-, -NH-CO- ou -COO-, ou bien Ar représente un radical polyvalent et Q représente un groupe de formule 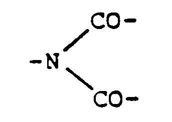 le radical Q étant de préférence lié directement à des atomes de carbone aromatiques ;
ii) un polymère d'éther d'arylène cristallin comprenant des motifs récurrents de formule :
-O-E-O-E'-
dans laquelle E représente le résidu d'un phénol dihydroxylique et E' représente le résidu d'un composé aromatique possédant un groupe électrophile dans au moins une des positions ortho et para vis-à-vis des liaisons de valence, les radicaux E et E' étant liés aux radicaux -O- par des atomes de carbone aromatiques ; ou
iii) un polyéther-imide ou polysulfone-imide qui comprend des motifs récurrents de formule 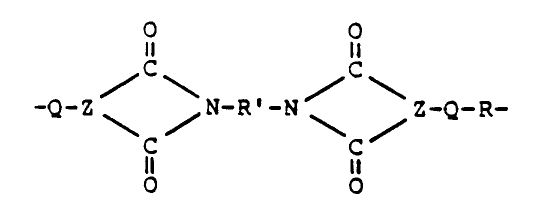 dans laquelle Q représente un radical -O- ou -SO₂, z représente un radical aromatique trivalent, R représente un radical aromatique divalent et R' représente un radical organique divalent.

6. Fil suivant la revendication 4, dans lequel le polymère aromatique comprend un polymère possédant un motif répété de formule 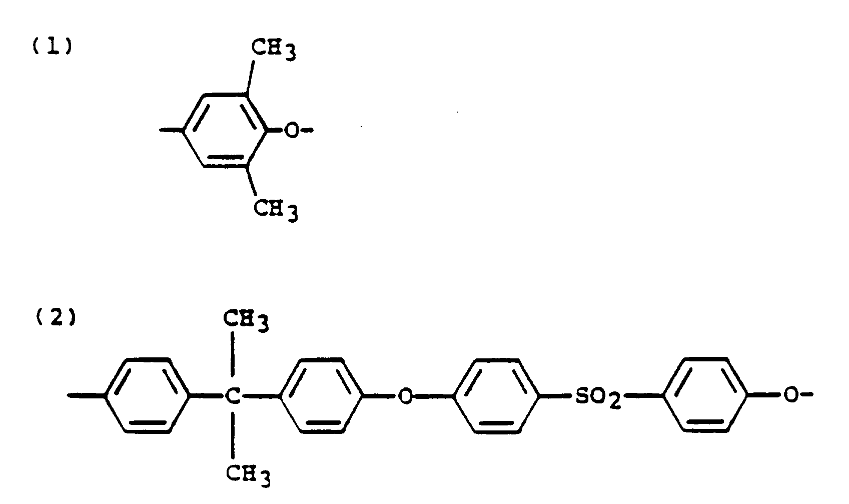 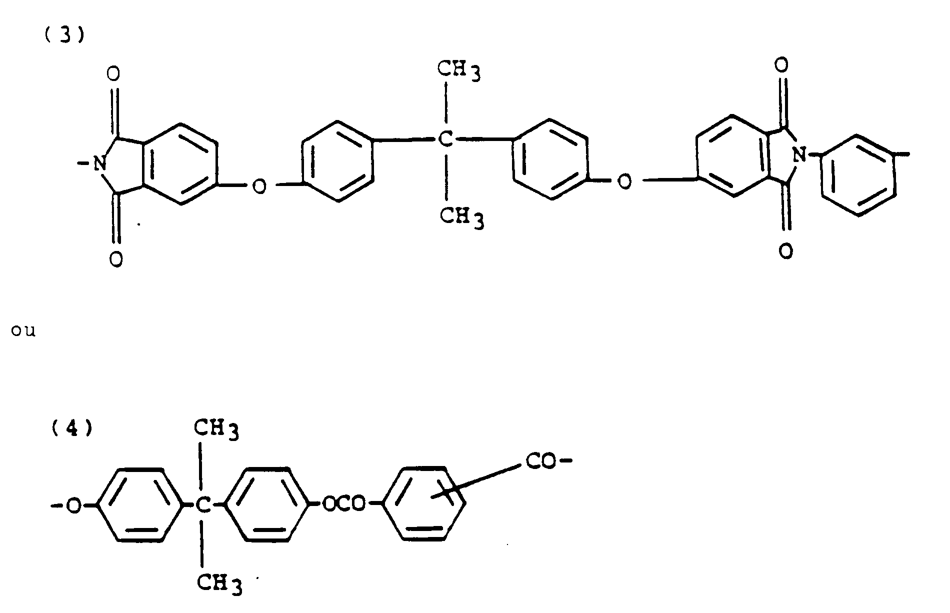 dans laquelle les motifs peuvent être dérivés totalement de l'acide téréphtalique ou de l'acide isophtalique ou bien de ces deux acides.

7. Fil suivant l'une quelconque des revendications 1 à 6, dans lequel le polymère contenant des groupements aliphatiques possède une quantité de résidu charbonneux non supérieure à 10 % en poids.

8. Fil suivant la revendication 7, dans lequel le polymère contenant des groupements aliphatiques possède une quantité de résidu charbonneux non supérieure à 5 % en poids.

9. Fil suivant l'une quelconque des revendications 1 à 8, dans lequel le polymère renfermant des groupements aliphatiques possède un rapport molaire du carbone à l'hydrogène non supérieur à 1,0.

10. Fil suivant la revendication 9, dans lequel le polymère renfermant des groupements aliphatiques possède un rapport molaire du carbone à l'hydrogène non supérieur à 0,75.

11. Fil suivant l'une quelconque des revendications 1 à 10, dans lequel le polymère possèdant des groupements aliphatiques comprend une polyoléfine, un copolymère d'une oléfine avec une oléfine, un acétate d'alkyle, un acrylate d'alkyle ou un ester vinylique ; un polyamide, un polyéther, un polyester, un ionomère ou un caoutchouc acrylique.

12. Fil suivant la revendication 11, dans lequel le polymère possédant des groupements aromatiques comprend un polyéthylène, un polyamide cristallin, un polyamide aromatique/aliphatique amorphe, un ionomère à base d'un sel métallique d'un polyéthylène méthacrylé, un polymère de téréphtalate de butylène, un copolymère styrène/diène di- ou tri-séquencé ou une de ses variantes hydrogénées ou bien un copolymère séquencé possédant des motifs ester à chaîne longue de formule générale : 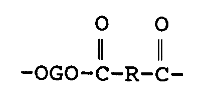 et des motifs ester à chaîne courte de formule 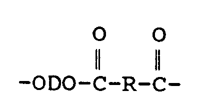 formules dans lesquelles G représente un radical divalent restant après l'élimination des groupes hydroxyle terminaux d'un poly(oxyde d'alkylène)-glycol, de préférence d'un poly(oxyde d'alkylène en C₂ à C₄) ayant un poids moléculaire d'environ 600 à 6000 ; R représente un radical divalent restant après élimination des groupes carboxyle d'au moins un acide dicarboxylique ayant un poids moléculaire inférieur à environ 300 ; et D représente un radical divalent restant après élimination des groupes hydroxyle d'au moins un diol ayant un poids moléculaire inférieur à 250.

13. Fil suivant l'une quelconque des revendications 1 à 12, dans lequel le mélange de la couche (a) possède un rapport molaire total du carbone à l'hydrogène non supérieur à 1,15.

14. Fil suivant l'une quelconque des revendications 1 à 13, dans lequel le mélange de la couche (a) contient au moins 20 % en poids du polymère aromatique.

15. Fil suivant l'une quelconque des revendications 1 à 14, dans lequel la couche de limitation de cheminement (b) comprend un polymère ayant un indice de cheminement comparatif d'au moins 400.

16. Fil suivant l'une quelconque des revendications 1 à 15, dans lequel la couche de limitation de cheminement (b) possède une quantité de résidu charbonneux non supérieure à 5 % en poids.

17. Fil suivant l'une quelconque des revendications 1 à 16, dans lequel la couche de limitation de cheminement (b) possède un rapport molaire C:H non supérieur à 1,15.

18. Fil suivant l'une quelconque des revendications 1 à 17, dans lequel la couche de limitation de cheminement (b) comprend un polymère fluoré, une polyoléfine, un copolymère d'une oléfine avec une oléfine, un acétate d'alkyle, un acrylate d'alkyle ou un ester vinylique ; un polyamide, un polyéther, un polyester, un ionomère ou un caoutchouc acrylique.
